# EUROPEAN PATENT SPECIFICATION

(11) **EP 3 712 513 B1**
(45) Date of publication and mention of the grant of the patent: **26.07.2023**
(21) Application number: 20162725.4
(22) Date of filing: 12.03.2020
(51) Int. Cl.: F24D 17/00, B60P 3/36, C02F 9/00, E03B 1/04

(54) **A WATER DISTRIBUTION AND WATER TREATING ARCHITECTURE SYSTEM**
WASSERVERTEILUNGS- UND WASSERBEHANDLUNGSARCHITEKTURSYSTEM
SYSTÈME D'ARCHITECTURE DE TRAITEMENT ET DE DISTRIBUTION D'EAU

(30) Priority: 13.03.2019 SE 1950315
(43) Date of publication of application: 23.09.2020
(73) Proprietor: Orbital Systems AB, 211 22 Malmö (SE)
(72) Inventor: RIDELL, Michael, 245 42 STAFFANSTORP (SE)
(74) Representative: AWA Sweden AB

(56) References cited:
- WO-A1-2009/147647
- WO-A1-2015/094107
- WO-A1-2015/094109
- WO-A1-2018/169472
- US-A1- 2018 022 618

## Description

### Field of the invention

The present invention relates to a water distribution and water treating architecture system.

### Technical Background

There are existing disclosed water distribution and water treating systems. For instance, in WO2013/095278 there is disclosed a hybrid device for a recirculation shower allowing purification and either recycling of water or discarding of water. The water is in this case purified by use of a filter unit or filter system. Moreover, in WO2017/099663 there is disclosed an apparatus for water supply and sanitary purposes, wherein the apparatus comprises a light unit intended for neutralisation of organisms in said water flow, and wherein the light unit may be arranged in possible different positions in the apparatus. Moreover, the apparatus may be arranged to allow for purification and either recycling of water or discarding of water.

Furthermore, in WO2009/147647 A1 there is disclosed a water recycling system for domestic use, said water recycling system involving an optical detector to detect certain smaller sized (nonfiltered) contaminants and a filter to remove larger sized (filtered) contaminants. Optical detection is a key direction of the technology used in this device.

Moreover, in WO2015/094107 A1 there is also disclosed a water recirculation system, such as a shower, which comprises a recirculation loop in which a filter system is arranged, which hybrid device also comprises multiple conductivity sensors for measuring of at least water quality.

One aim of the present invention is to provide a water distribution and water treating architecture which is especially suitable for applications with a limited access to clean water, such as in recreational vehicles (RVs) or ships or the like.

### Summary of the invention

The stated purpose above is achieved by a water distribution and water treating architecture system comprising a light grey water tank, said light grey water tank being connected to a fresh water inlet, said light grey water tank further being connected to a heater so that both cold and hot water may be fed to a water treating and distributing unit from the light grey water tank, said water treating and distributing unit comprising a water treating unit, wherein the water distribution and water treating architecture system also comprises a user unit with a user outlet and a sensor unit tank, which sensor unit tank comprises at least one sensor directed to measuring water quality and sending information to a control unit, wherein the water distribution and water treating architecture system comprises a user water recirculation loop enabling recirculation of water from the sensor unit tank into the water treating and distributing unit and water treating unit and further to the user outlet, said sensor unit tank also being connected to a grey water outlet unit; wherein the water distribution and water treating architecture system also comprises a water feeding recirculation loop enabling recirculation of water from the light grey water tank into the water treating and distributing unit and water treating unit and back to the light grey water tank; and wherein the water treating unit comprises a heater. The water distribution and water treating architecture system comprises an additional recirculation loop for recirculation of water from the user unit and to the light grey water tank.

As notable from above, the system according to the present invention comprises at least two recirculation loops, one over the user unit to and from the water treating and distributing unit and another one over the light grey water tank to and from the water treating and distributing unit.

Moreover, the present invention provides a solution where water being too cold or too hot according to certain set parameters, but which otherwise is considered to have the right water quality, may be reused. Therefore, the present invention provides a system where also such volumes of too cold water or too hold water may be saved by being reused. This will be better understood when reading the description below and by viewing the figure.

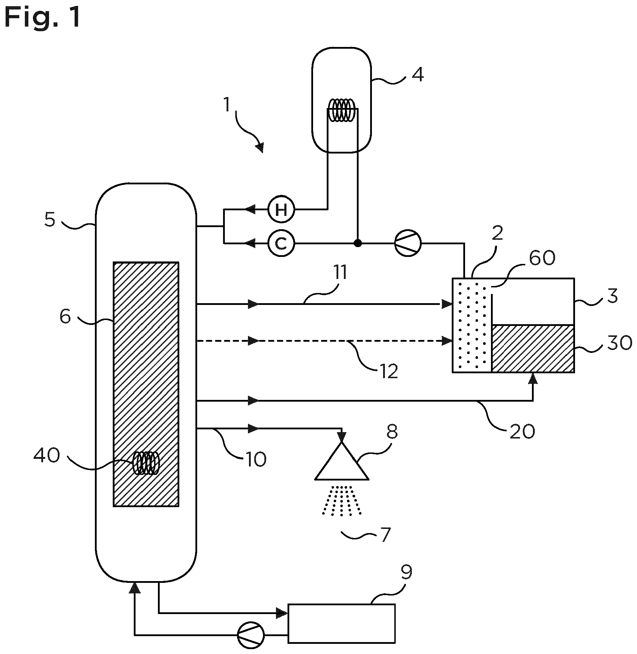

It should be noted that for instance the fresh water inlet suitably may be a tank (see fig. 1). For instance, in many applications when fresh water is only obtained at certain times, such as in the case of RVs, ships or boats, then such a tank is filled with fresh water when such is obtainable. According to the present invention, this fresh water is then treated and recycled in the two loops as much as possible.

According to one specific embodiment of the present invention, the fresh water inlet is in the form of a fresh water tank.

Suitably, when refilling the fresh water tank and system with fresh water, the fresh water tank overflows to also fill the light grey water tank with fresh water. This embodiment is depicted in fig. 1 where there is provided a gap and overflow functionality between the fresh water tank and the light grey water tank.

Furthermore, the fresh water tank suitably has connections to several user units, such as sinks or other kitchen units. It is from this fresh water tank drinkable water may be flown to user units where such water quality is needed.

Moreover, the "light grey water tank" according to the present invention may be regarded as a water feeding tank containing water of quality from top quality and down to semi-quality, where a semi-quality is a water quality too good to be sent to waste, e.g. to a grey water tank, but perhaps not high enough to be used as e.g. shower water without being further purified in the water treating unit.

### Specific embodiments of the invention

Below, some specific embodiments of the present invention are disclosed.

It should be noted that the water treating and distributing unit and the water treating unit may be one and the same unit or system according to one embodiment of the present invention. Moreover, the water treating unit may in fact comprise several components, such as a light treating unit, e.g. a UV treating unit, and also one or more filters, such as a particle filter and/or carbon filter etc. This is further discussed below.

According to one specific embodiment of the present invention, the system comprises two pumps of which one pump enables pumping water from the sensor unit tank and another pump enables pumping of water from the light grey water tank and into the water treating and distributing unit. The placing of the pumps and other alternatives then the embodiment mentioned above are totally possible according to the present invention. Availability and applicable space in a certain application have to decide of where to place the pumps.

According to yet another specific embodiment, the sensor unit tank is connected to a grey water tank via the grey water outlet unit. The grey water tank collects grey water not intended to be recycled in the system. In the case of applications such as RVs and ships where the possibility of draining off contaminated water is only there from time to time, then a grey water tank is needed to store contaminated water not of interest to treat and recycle. In this regard it should be noted that there is a "contamination level point" when there is no longer cost-effective to treat that water to reach a level where the water is possible to recycle. When the water quality is above this point then the system according to the present invention should enable purification treatment of the water. When the water quality level is below this point, then that water fraction should be sent to the great water tank.

It should be noted that the system according to the present invention finds use in many different types of applications. As mentioned, RVs and different types of ships and boats are of great interest. For instance, a system according to the present invention may be implemented in yachts. Moreover, military applications, such as for operations in war conditions out in the field, are also possible. Systems according to the present invention in submarines are also of great interest. Other applications are for refugee camps or for different form of events, such as music festivals or the like. Fact is that all types of applications where the water amount is fixed and there is no continuous access to fresh water are of interest according to the present invention.

According to one specific embodiment, the water treating unit comprises a light treating unit, preferably a UV treating unit. One possible example is one or more LED units, such as a UV LED unit.

According to yet another specific embodiment of the present invention, the water treating unit comprises at least one filter. Combinations are totally possible, i.e. a water treating unit comprising a filter and a light treating unit.

According to the present invention, the system comprises an additional recirculation loop (see (12) in fig. 1) for recirculation of water from the user unit and to the light grey water tank. This recirculation loop is used to sent water from a user unit and then back to the feeding water tank. Moreover, this additional recirculation loop may also be used at times when a user unit is not in operation, however other procedures are taking place. One such example is during a cleaning procedure of the system. If hot water is used to clean parts or the entire system, then that water may be sent via this additional recirculation loop and to the light grey water tank (water feeding tank into the system). As such this water may be reused in the system again.

The present invention is also directed to a light grey water tank adapted to suit a system with recirculation to and from the light grey water tank according to the present invention. According to one specific embodiment of the present invention, a feeding tube is arranged in a middle height section of the light grey water tank. This may be permanently arranged or may be a flexible solution which follows the water level, and thus still feeds from a middle section of the water level held inside of the light grey water tank. This may be of interest as a solution to ensure that the feeding from the light grey water tank is continuously performed from a water fraction having the highest quality of the water inside the light grey water tank. As some contaminants may sediment, then this solution ensures that water is not fed from a bottom fraction in the light grey water tank. Moreover, other possible contaminants, such as shampoo or the like, normally have a lower density than water and thus would be situated in a top fraction of the water inside of the light grey water tank. As may be understood from above, it may be of interest to ensure a feeding from a middle section of the water inside of the water tank. As may be understood from above, the present invention may use sedimentation and natural bedding as driving forces for fractionation of different water qualities inside of the light grey water tank.

According to yet another specific embodiment of the present invention, the light grey water tank is arranged with a float body unit. According to one specific embodiment of the present invention, a feeding tube is arranged on a float body unit arranged to be positioned in a middle height section of the water volume contained inside of the light grey water tank. The float body may be directed to use density as a driving force. As may be understood from above, such a solution ensures to feed water from a middle section of the water volume held inside of the light grey water tank. This may provide a solution to ensure that a comparatively high water quality section is fed from inside of the light grey water tank.

Moreover, also feeding from e.g. a lower section of the light grey water tank is totally possible according to the present invention. This may be valid both in the case of a flexible feeding or a permanent feeding arrangement in a system according to the present invention.

It should be noted that a float body arrangement is totally optional in a system according to the present invention. Also permanent arrangements with reference to feeding etc. are totally possible according to the present invention. Again, also permanent feeding arrangements from a lower section of the light grey water tank are possible according to the present invention. The choice of where the feeding is made may be driven by certain set system requirements. For instance, the system may be set to treat and purify water from a comparatively lower quality level, i.e. to ensure an increased total treatment level of the water volume in the system, and in such cases it may be of interest to feed from a section of the light grey water tank where such water quality is expected.

### Detailed description of the drawing

In fig. 1 there is shown one specific embodiment of the present invention. According to this embodiment, the water distribution and water treating architecture system 1 comprises a light grey water tank 2 which is connected to a fresh water inlet 3. In this case the fresh water inlet 3 is in the form of a tank 3. Water may be flown from the fresh water tank 3 to user units not shown, e.g. sinks or other kitchen units. From the fresh water tank 3 drinkable water may be obtained.

This system is suitable for e.g. RVs or ships / boats. The tank 3 may then be filled when there is access to fresh water. The connection between the fresh water tank 3 and the light grey water tank 2 may e.g. be provided by an overflow gap 60 as is shown in fig. 1. Therefore, according to one specific embodiment of the present invention, an overflow gap 60 is arranged between the fresh water tank 3 and the light grey water tank 2. Other solutions are also possible, such as e.g. valve connections. This may also be valid for a connection between the light grey water tank 2 and the grey water tank 30, and also between all tanks 2, 3, 30 if needed.

From the light grey water tank 2 water may be fed through a heater 4 so that also hot water may be provided into the water treating and distributing unit 5. This water treating and distributing unit 5 comprises a water treating unit 6, e.g. in the form of a light treating unit, such as a UV treating unit. Also one or more filters may be components inside of the water treating unit 6. The water streams fed into the water treating unit 6 may then be treated in the water treating unit 6 to increase the water quality when this is needed. This is of course also valid and possible for a water stream being fed from the senor tank 9 (see explanation below).

The water distribution and water treating architecture system 1 further comprises a user unit 7, in this case in the form of a shower, with a user outlet 8, in this case in the form of a shower head. Furthermore, the water distribution and water treating architecture system 1 also comprises a sensor unit tank 9 which comprises at least one sensor directed to measuring water quality and sending information to a control unit. In this specific case, the sensor tank is provided in a drain unit in the shower. The drain unit or sensor unit tank 9 suitable also comprises a rough filter for filtering off hair or material of larger sizes / diameters.

The water distribution and water treating architecture system 1 further comprises a user water recirculation loop 10 enabling recirculation of water from the sensor unit tank 9 into the water treating and distributing unit 5 and water treating unit 6, for purification when needed, and further to the user outlet 8. As such there is provided a recirculation loop 10 over the user unit 7, in this case the shower unit. Moreover, the sensor unit tank 9 is also connected to a grey water outlet unit 20 to enable to send contaminated water to waste. As notable, in an application like the embodiment shown, i.e. for RVs or the like, then the grey water outlet unit 20 suitably is led to a grey water tank 30 in which grey water may be stored until it is possible to drain off at a station or the like.

Moreover, according to the present invention, the water treating unit 6 comprises a heater, in this case heater 40. This heater enables to heat water being recirculated in the recirculation loop 10 of the user unit 7, without the need of using the heater unit 4, so that the shower water may be kept at the right temperature. The heater unit 40 suitably is smaller and has a lower capacity in comparison to the heater unit 4. The heater unit 40 is intended to be used only for heating of recirculation water and not to heat cold water to a shower temperature, which is the case when using the heater unit 4.

Moreover, the water being recirculated here may also be treated in the water treating unit via filtration and UV treatment before being recirculated. In this regard it should also be noted that the floor unit, that is the sensor tank 9, suitably also comprises a rough filter unit.

As notable in fig. 1, it is also possible to flow water from the water treating and distributing unit 5 and down to the sensor tank 9. This is of interest to enable to perform a heat cycle / hygienisation operation of also the floor unit of a shower, i.e. the sensor unit tank 9. Moreover, it may also be of interest with reference to the possibility to measure the water quality of the water from the light grey water tank 2 without the need of having extra sensors in this tank 2. In relation to the above it should, however, be noted that a sensor system implemented in a system 1 according to the present invention may comprise several other sensors, such as sensors in the light grey water tank, directed to measuring water quality and/or level etc., and also e.g. a sensor indicating the functionality of the water treating unit 6, such as a UV sensor, etc. etc. If the water quality inside of the light grey water tank 2 is poor, then this volume may be sent directly to the grey water tank 30. As said, the communication between these two tanks may be enabled via a valve or the like.

In relation to the above and fig. 1 it should be noted that the sensor unit tank 9 only is not connected to a drain or waste directly, but only to a grey water tank 30. This implies that the system 1 is a closed system where a certain water amount is fixed and used and recycled as long as possible until fresh water has to be filled into the system 1 (and grey water in grey water tank 30 has to be emptied).

The water distribution and water treating architecture system 1 also comprises a water feeding recirculation loop 11 enabling recirculation of water from the light grey water tank 2 into the water treating and distributing unit 5 and water treating unit 6 and back to the light grey water tank 2. This second recirculation loop provides the possibility to treat and purify water continuously and not only in the user unit 7. This is important to ensure a water quality level in the light grey water tank 2. If this is not possible then growth of microorganisms and bacteria is unavoidable, i.e. if not chemically treated continuously. This is also true for the fresh water tank 3 some time after this fresh water has been filled into that tank. The system 1 according to the present invention provides a solution to overcome this issue as a whole.

The system 1 according to the present invention also provides the possibility of really purifying water having what may be called a semi-quality. Therefore, the system 1 provides the capability of fractionating water making sure that only the lowest quality is sent to the grey water tank 30. As mentioned, suitably the cost profile should decide when to treat and recirculate water vs sending the water to the grey water tank 30. The system 1 according to the present invention enables to keep a higher quality of water inside of the system 1 a longer time. This also implies that the actual time point when water has to be fed to the grey water tank 30 via the grey water outlet unit 20 may be delayed by the architecture of the system 1 according to the present invention.

As seen in fig. 1, in this case the system 1 also comprises an additional recirculation loop 12 for recirculation of water from the user unit 7 and to the light grey water tank 2. This may also be used when the user unit 7 is not in ordinary operation, such as during a cleaning procedure, e.g. when hot water is fed through parts of the system 1.

Furthermore, in this case the system 1 comprises two pumps of which one pump enables pumping water from the sensor unit tank 9 and another pump enables pumping of water from the light grey water tank 2 and into the water treating and distributing unit 5.

The control unit connected to the sensor in the sensor tank 9 provides a decision if to recirculate water or send it into the grey water outlet unit 20 over the user unit 7. Suitably, the control unit also controls the water feeding recirculation loop 11, that is when to recirculate and not. Moreover, also the water treating unit 6 suitably is controlled by the control unit.

In relation to the above it should be said that the system according to the present invention may provide the possibility for the user to change the needed water quality level. Such a changed requirement suitably is set by the user for the water quality in the user unit 7, e.g. at times when there is no supply of fresh water for an extended time period. When such changed requirement is set, then this may enable to use water of less quality from the light grey water tank. At such times, the user may shower in water having a lower quality also in the shower instead of sending this water to the grey water tank. This may be of interest for the user as the alternative is to not shower at all.

Fact is that the entire operation of the system 1 may be set by the control unit. This also implies that the control unit sets where water should be fed with regards to one of or several of the recirculation loops 10, 11, 12. This may in turn be decided by sensors connected to the control unit. It should be noted that the system 1 may comprise several sensors. As mentioned, one sensor may be provided in the sensor unit 9, but also other sensors may be provided in the system 1. For instance, one or more inside of the water treating and distributing unit 5. Also other sensor places are fully possible according to the present invention. The control unit suitably decides the entire operation of the system 1, i.e. when certain operations should be performed, e.g. a cleaning procedure. This may be set by values indicated from sensors but may also be performed according to certain schedules, e.g. where certain procedures are more suitable during night time etc. To summarize, the system 1 may be operated continuously and/or according to certain set schedules.

It should be noted that also chemical treatment may be used in a system 1 according to the present invention. One possible alternative is chlorine tablets. Moreover, also cleaning procedures of the system is possible to use as a combination with the above. For instance, heating procedures when very hot water is fed through the system may be used. Another alternative is to use citric acid contained in tablet form. Also combinations of different cleaning or decontaminating procedures are possible.

## Claims

1. A water distribution and water treating architecture system (1) comprising a light grey water tank (2), said light grey water tank (2) being connected to a fresh water inlet (3), said light grey water tank (2) further being connected to a heater (4) so that both cold and hot water may be fed to a water treating and distributing unit (5) from the light grey water tank (2), said water treating and distributing unit (5) comprising a water treating unit (6), wherein the water distribution and water treating architecture system (1) also comprises a user unit (7) with a user outlet (8) and a sensor unit tank (9), which sensor unit tank (9) comprises at least one sensor directed to measuring water quality and sending information to a control unit,
wherein the water distribution and water treating architecture system (1) comprises a user water recirculation loop (10) enabling recirculation of water from the sensor unit tank (9) into the water treating and distributing unit (5) and water treating unit (6) and further to the user outlet (8), said sensor unit tank (9) also being connected to a grey water outlet unit (20);
wherein
the water distribution and water treating architecture system (1) also comprises a water feeding recirculation loop (11) enabling recirculation of water from the light grey water tank (2) into the water treating and distributing unit (5) and water treating unit (6) and back to the light grey water tank (2),
and wherein
the water treating unit (6) comprises a heater (40),
**characterized in that** the water distribution and water treating architecture system (1) also comprises an additional recirculation loop (12) for recirculation of water from the user unit (7) and to the light grey water tank (2).

2. The system (1) according to claim 1, wherein the fresh water inlet (3) is in the form of a fresh water tank (3).

3. The system (1) according to claim 1 or 2, wherein the system (1) comprises two pumps of which one pump enables pumping water from the sensor unit tank (9) and another pump enables pumping of water from the light grey water tank (2) and into the water treating and distributing unit (5).

4. The system (1) according to any of claims 1-3, wherein the sensor unit tank (9) is connected to a grey water tank (30) via the grey water outlet unit (20).

5. The system (1) according to any of claims 1-4, wherein the water treating unit (6) comprises a light treating unit, preferably a UV treating unit.

6. The system (1) according to any of claims 1-5, wherein the water treating unit (6) comprises at least one filter.

7. The system (1) according to any of claims 2-6, wherein an overflow gap (60) is arranged between the fresh water tank (3) and the light grey water tank (2).

8. The system (1) according to any of claims 1-8, wherein a feeding tube is arranged on a float body unit arranged to be positioned in a middle height section of the water volume contained inside of the light grey water tank (2).

## Patentansprüche

1. Wasserverteilungs- und Wasseraufbereitungsarchitektursystem (1), umfassend einen Hellgrauwassertank (2), wobei der Hellgrauwassertank (2) mit einem Frischwassereinlass (3) verbunden ist, wobei der Hellgrauwassertank (2) außerdem mit einer Heizung (4) verbunden ist, sodass sowohl kaltes als auch heißes Wasser aus dem Hellgrauwassertank (2) einer Wasseraufbereitungs- und -verteilungseinheit (5) zugeführt werden kann, die Wasseraufbereitungs- und - verteilungseinheit (5) umfassend eine Wasseraufbereitungseinheit (6), wobei das Wasserverteilungs- und Wasseraufbereitungsarchitektursystem (1) ferner eine Benutzereinheit (7) mit einem Benutzerauslass (8) und einem Sensoreinheitstank (9) umfasst, wobei der Sensoreinheitstank (9) mindestens einen Sensor umfasst, der zum Messen von Wasserqualität und zum Übermitteln von Informationen an eine Steuereinheit eingerichtet ist,
**dadurch gekennzeichnet, dass**
das Wasserverteilungs- und Wasseraufbereitungsarchitektursystem (1) einen Benutzerwasserrezirkulationskreislauf (10) umfasst, der die Rezirkulation von Wasser aus dem Sensoreinheitstank (9) in die Wasseraufbereitungs- und -verteilungseinheit (5) und die Wasseraufbereitungseinheit (6) und weiter zum Benutzerauslass (8) ermöglicht, wobei der Sensoreinheitstank (9) auch mit einer Grauwasserauslasseinheit (20) verbunden ist:
wobei das Wasserverteilungs- und Wasseraufbereitungsarchitektursystem (1) ferner eine zusätzliche Rezirkulationsströmungsleitung (12) für die Rezirkulation von Wasser von der Benutzereinheit (7) und zum Hellgrauwassertank (2) umfasst;
wobei das Wasserverteilungs- und Wasseraufbereitungsarchitektursystem (1) ferner einen Wasserzufuhrrezirkulationskreislauf (11) umfasst, der die Rezirkulation von Wasser aus dem Hellgrauwassertank (2) in die Wasseraufbereitungs- und -verteilungseinheit (5) und die Wasseraufbereitungseinheit (6) und zurück zum Hellgrauwassertank (2) ermöglicht,
und wobei die Wasseraufbereitungseinheit (6) eine Heizung (40) umfasst.

2. System (1) nach Anspruch 1, wobei der Frischwassereinlass (3) als Frischwassertank (3) ausgebildet ist.

3. System (1) nach Anspruch 1 oder 2, wobei das System (1) zwei Pumpen umfasst, von denen eine Pumpe das Pumpen von Wasser aus dem Sensoreinheitstank (9) und eine andere Pumpe das Pumpen von Wasser aus dem Grauwassertank (2) und in die Wasseraufbereitungs- und -verteilungseinheit (5) ermöglicht.

4. System (1) nach einem der Ansprüche 1-3, wobei der Sensoreinheitstank (9) über die Grauwasserauslasseinheit (20) mit einem Grauwassertank (30) verbunden ist.

5. System (1) nach einem der Ansprüche 1-4, wobei die Wasseraufbereitungseinheit (6) eine Lichtbehandlungseinheit, vorzugsweise eine UV-Behandlungseinheit, umfasst.

6. System (1) nach einem der Ansprüche 1-5, wobei die Wasseraufbereitungseinheit (6) mindestens einen Filter umfasst.

7. System (1) nach einem der Ansprüche 2-6, wobei zwischen dem Frischwassertank (3) und dem Hellgrauwassertank (2) ein Überlaufspalt (60) angeordnet ist.

8. System (1) nach einem der Ansprüche 1-8, wobei ein Zuführschlauch an einer Schwimmerkörpereinheit angeordnet ist, die so angeordnet ist, dass sie in einem mittleren Höhenabschnitt des im Hellgrauwassertank (2) enthaltenen Wasservolumens positioniert ist.

## Revendications

1. Système d'architecture de distribution d'eau et de traitement d'eau (1) comprenant un réservoir d'eau légèrement grise (2), ledit réservoir d'eau légèrement grise (2) étant raccordé à une entrée d'eau potable (3), ledit réservoir d'eau légèrement grise (2) étant en outre raccordé à un réchauffeur (4) de telle sorte qu'à la foi de l'eau froide et chaude peut être fournie à une unité de traitement et distribution d'eau (5) depuis le réservoir d'eau légèrement grise (2), ladite unité de traitement et distribution d'eau (5) comprenant une unité de traitement d'eau (6), le système d'architecture de distribution d'eau et de traitement d'eau (1) comprenant également une unité utilisateur (7) avec une sortie utilisateur (8) et un réservoir d'unité de capteurs (9), lequel réservoir d'unité de capteurs (9) comprend au moins un capteur destiné à mesurer la qualité de l'eau et envoyer des informations à une unité de commande,
**caractérisé en ce que**
le système d'architecture de distribution d'eau et de traitement d'eau (1) comprend une boucle de recyclage d'eau utilisateur (10) permettant le recyclage d'eau depuis le réservoir d'unité de capteurs (9) jusqu'à l'intérieur de l'unité de traitement et distribution d'eau (5) et l'unité de traitement d'eau (6) et plus loin jusqu'à la sortie utilisateur (8), ledit réservoir d'unité de capteurs (9) étant également raccordé à une unité de sortie d'eau grise (20) ;
dans lequel
le système d'architecture de distribution d'eau et de traitement d'eau (1) comprend également une conduite de recyclage supplémentaire (12) pour le recyclage d'eau depuis l'unité utilisateur (7) et jusqu'au réservoir d'eau légèrement grise (2) ;
dans lequel
le système d'architecture de distribution d'eau et de traitement d'eau (1) comprend également une boucle de recyclage d'alimentation en eau (11) permettant le recyclage d'eau depuis le réservoir d'eau légèrement grise (2) jusqu'à l'intérieur de l'unité de traitement et distribution d'eau (5) et l'unité de traitement d'eau (6) et de nouveau jusqu'au réservoir d'eau légèrement grise (2),
et dans lequel
l'unité de traitement d'eau (6) comprend un réchauffeur (40).

2. Système (1) selon la revendication 1, dans lequel l'entrée d'eau potable (3) se présente sous la forme d'un réservoir d'eau potable (3).

3. Système (1) selon la revendication 1 ou 2, le système (1) comprenant deux pompes dont une pompe permet le pompage d'eau depuis le réservoir d'unité de capteurs (9) et une autre pompe permet le pompage d'eau depuis le réservoir d'eau légèrement grise (2) et jusqu'à l'intérieur de l'unité de traitement et distribution d'eau (5).

4. Système (1) selon l'une quelconque des revendications 1 à 3, dans lequel le réservoir d'unité de capteurs (9) est raccordé à un réservoir d'eau grise (30) par le biais de l'unité de sortie d'eau grise (20) .

5. Système (1) selon l'une quelconque des revendications 1 à 4, dans lequel l'unité de traitement d'eau (6) comprend une unité de traitement à la lumière, de préférence une unité de traitement aux UV.

6. Système (1) selon l'une quelconque des revendications 1 à 5, dans lequel l'unité de traitement d'eau (6) comprend au moins un filtre.

7. Système (1) selon l'une quelconque des revendications 2 à 6, dans lequel un espace de débordement (60) est ménagé entre le réservoir d'eau potable (3) et le réservoir d'eau légèrement grise (2).

8. Système (1) selon l'une quelconque des revendications 1 à 8, dans lequel un tube d'alimentation est disposé sur une unité à corps flottant agencée pour être positionnée dans une section de hauteur centrale du volume d'eau contenu à l'intérieur du réservoir d'eau légèrement grise (2).
